(19) Europäisches Patentamt
European Patent Office
Office européen des brevets

(11) **EP 4 510 536 A1**

(12) **EUROPEAN PATENT APPLICATION**

(43) Date of publication:
**19.02.2025 Bulletin 2025/08**

(21) Application number: **23191283.3**

(22) Date of filing: **14.08.2023**

(51) International Patent Classification (IPC):
*H04L 65/80* (2022.01)     *H04L 67/12* (2022.01)
*H04L 67/55* (2022.01)     *H04L 65/4053* (2022.01)
*H04W 4/70* (2018.01)

(52) Cooperative Patent Classification (CPC):
**H04L 65/80; H04L 65/4053; H04L 67/12;
H04L 67/55; H04W 4/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **KUHMUENCH, Christoph**
  **Princeton, NJ, 08540 (US)**
• **TYLKA, Joseph**
  **Pennington, NJ, 08534 (US)**
• **WOODS, Michael**
  **Naperville, IL, 60564 (US)**

(74) Representative: **Horn Kleimann Waitzhofer
Schmid-Dreyer
Patent- und Rechtsanwälte PartG mbB
Theresienhöhe 12
80339 München (DE)**

(54) **DOMAIN ALLOCATION OF DDS TAGS IN DISTRIBUTED SOFTWARE-DEFINED CONTROL APPLICATIONS**

(57)     Methods for allocating communication tags (242, 244/244', 252, 272) into one or more data distribution (DDS) domains and corresponding systems and computer-readable mediums. A method includes analyzing (302, 410) a network definition of a computer network (200) comprising a plurality of nodes (210, 220, 230), wherein each of the plurality of nodes (210, 220, 230) comprise one or more applications (212, 214, 222, 224, 226, 232) utilizing DDS, and wherein each of the one or more applications (212, 214, 222, 224, 226, 232) perform at least one of publishing to at least one of a plurality of communication tags (242, 244/244', 252, 272) and reading from at least one of the plurality of communication tags (242, 244/244', 252, 272). The method includes grouping, based on the analysis (302, 410), the plurality of communication tags (242, 244/244', 252, 272) into one or more domains. The method includes providing an optimal arrangement of the plurality of communication tags (242, 244/244', 252, 272) into the one or more domains, wherein the optimal arrangement improves network communication and system performance of the computer network (200).

FIG. 2

**Description**

TECHNICAL FIELD

The present disclosure is directed, in general, to communication tags utilized in data distribution service (DDS) applications and other applications and in particular cases, to methods for automatically allocating such tags into one or more DDS domains or groups so as to optimize application and/or system performance.

BACKGROUND OF THE DISCLOSURE

Data distribution service (DDS) is a standardized high-speed communication bus used to communicate between applications running on the same host or different hosts (e.g., computers, mobile devices, servers, printers, etc.). The hosts may be connected via a local area network (LAN) or via long-distance, routed connections. For DDS applications, communication occurs in a publish/subscribe communication pattern in which an application performing one or more processes writes to a tag and another application or applications performing one or more processes reads from that tag. To facilitate the publish/subscribe communication, tags may be arranged into certain groups and/or subgroups (i.e., domains), whereby the particular arrangement may be important for optimizing system and network performance. Improved methods for achieving the most efficient arrangement are desirable.

SUMMARY OF THE DISCLOSURE

Various disclosed embodiments include methods for allocating communication tags into one or more data distribution domains and corresponding systems and computer-readable mediums. A method includes analyzing a network definition of a computer network comprising a plurality of nodes, wherein each of the plurality of nodes comprise one or more applications utilizing DDS, and wherein each of the one or more applications perform at least one of publishing to at least one of a plurality of communication tags and reading from at least one of the plurality of communication tags. The method includes grouping, based on the analysis, the plurality of communication tags into one or more domains. The method includes providing an optimal arrangement of the plurality of communication tags into the one or more domains, wherein the optimal arrangement improves network communication and system performance of the computer network.

In some embodiments, the method also includes identifying a set of distributions for the computer network, wherein the set of distributions specify which of the one or more applications are running on each of the one or more nodes, respectively, identifying a set of configurations for the computer network, wherein the set of configurations specify which of the plurality of communication tags are being utilized by each of the one or more applications, respectively, and providing one or more cost functions, providing one or more constraints. This method also includes applying an optimizer to the set of distributions and the set of configurations to determine optimization results that comprise at least an optimal number of domains and an optimal mapping of the plurality of communication tags to the optimal number of domains, wherein the optimizer minimizes the one or more provided cost functions and accounts for the one or more provided constraints, and allocating the plurality of communication tags into one or more domains, according to the optimal mapping of the plurality of communication tags to the optimal number of domains determined by the optimizer. The method can also include refining the optimization results by incorporating one or more gateways.

In various embodiments, the one or more constraints comprise limiting a total number of domains per node to no more than 130 domains and/or the one or more constraints comprise limiting a total number of domains per application to no more than 40 domains. In various embodiments, the optimizer is a linear optimizer, commercial optimizer, open-source optimizer, one or more SAT solvers, or any combinations thereof.

In some embodiments, the method also includes creating a preliminary domain for each of the one or more nodes. Each preliminary domain can correspond to one of the one or more nodes, respectively. This method also includes iterating through the plurality of communication tags to determine which of the plurality of communication tags, if any, are being utilized by a single node of the one or more nodes, allocating each of the plurality of communication tags that are accessed by a single node into the preliminary domain corresponding to that node, and iterating through one or more remaining communication tags not yet allocated, if any, until each of the one or more remaining communication tags are allocated into an existing domain. Each iteration can include allocating, if possible, the remaining communication tag that is being accessed by multiple nodes into any existing domain comprising at least one communication tag that is being accessed by the same exact multiple nodes, creating a new domain, if allocation is not possible, wherein the remaining communication tag is allocated to the new domain and wherein the new domain becomes one of the existing domains, searching through the existing domains to find any overlapping domains, wherein the overlapping domains comprise two or more existing domains that service a number of the same one or more nodes, and combining any of the overlapping domains into a single domain. Various embodiments also include splitting any existing domains that comprise a number of communication tags that breach a maximum communication tag capacity per domain and/or refining allocation of the plurality of communication tags by incorporating one or more gateways.

In various embodiments, a total number of domains per node is limited to no more than 130 domains and/or a total number of domains per application is limited to no more than 40 domains. In various embodiments, each of the one or more nodes provide which of the one or more applications it hosts, each of the one or more applications provides which of the plurality of communication tags it publishes and subscribes to, the allocating steps are performed via DDS configuration mechanisms, and/or the allocating steps are performed automatically. Disclosed processes can also include communicating over the computer network between the one or more applications on the plurality of nodes using the optimal arrangement.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

FIG. 1 illustrates a block diagram of a DDS-based data processing system in which an embodiment can be implemented;

FIG. 2 illustrates an example of a DDS-based computer network in accordance with disclosed embodiments;

FIG. 3 illustrates an example of a process in accordance with disclosed embodiments; and

FIG. 4A-4B illustrate an example of a process in accordance with disclosed embodiments.

DETAILED DESCRIPTION

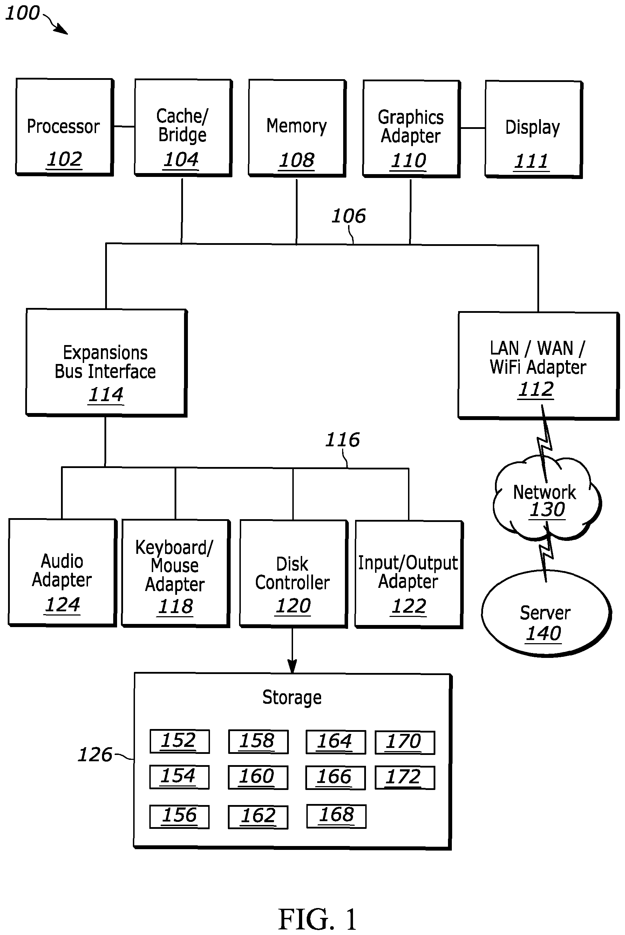

FIGS. 1 through 4B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

To promote high-speed communication between applications running on a computer network, disclosed embodiments utilize data distribution service (DDS) technology. In certain DDS communication networks, particularly those utilized for industrial applications, the number of hosts, applications, and communication tags may be highly numerous, for instance the networks may comprise, without limitation, tens of thousands of (i.e., more than 10,000) components. Moreover, each of the applications may write to the various tags at extremely high speeds, for instance the applications may experience, without limitation, hundreds of (i.e., more than 100) updates per second. In some systems, when dealing with applications that use numerous hosts, processes, and tags with high update rates, it may be beneficial to distribute the tags into various domains as well as utilize "gateways" that allow for synchronization of the same communication tag across multiple domains. Structuring the domains in the most ideal way and making clever use of gateways ensures that communication tags that are only read and written on the same machine are communicated over the fastest possible mechanism (shared memory rather than network).

While there is, theoretically, no limitation on the number of tags that can belong to each domain on a network, there may be some practical constraints. For instance, the more tags there are in a single domain, the more random-access memory (RAM) that is required by each application that is a member of that domain. Further, a high number of tags in a single domain may increase startup times, impact computer processing unit (CPU) loads which may lower throughput, and slow down overall network communication. This may be particularly problematic for high-speed control applications in which a guarantee of low latency is required.

To avoid these possible issues, disclosed embodiments may include processes that exploit and improve upon configuration mechanisms offered by DDS technology to distribute numerous communication tags into various domains. Disclosed embodiments may consider that if all tags within a domain are only used by applications on a single host, then shared memory can be used for communication, rather than using communication via a network stack and/or sockets. This in turn may accelerate communication. Further, disclosed embodiments may consider that if all tags within a domain are only used by applications on hosts that are in the same local area network (LAN), then internet protocol (IP) broadcasting can be used for communication, which may be faster when many applications subscribe to the same tag. Further still, disclosed embodiments may consider that if some tags in a domain are used by applications that are not in the same LAN, the standard transmission control protocol (TCP)/IP broadcasting may be used for communication.

Disclosed embodiments provide various methods for automatically distributing numerous communication tags into various domains, to optimize network communication and system performance. Such methods include, without limitation, mathematical optimization approaches and algorithmic partitioning approaches that may be capable of finding and implementing an efficient split of the tags into the various domains, while avoiding the need for manual and/or labor-intensive allocation, which can be both suboptimal and error prone.

FIG. 1 illustrates a block diagram of a DDS-based data processing system 100 in which an embodiment can be implemented, for example as a computer system particularly configured by software or otherwise to perform the processes as described herein, and in particular as each one of a plurality of interconnected and communicating systems as described herein. Moreover, data processing system 100 of FIG. 1 may be a general representation of a computing system that may serve as a DDS node/host of the present disclosure, that may perform the allocation/optimization of communication tags, domains, and overall configuration of the DDS system of the present disclosure, or that may do both. Data processing system 100 depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111. Of course, other implementations within the scope of the disclosure may use data processing or computer systems that are not DDS-based.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in FIG. 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

Data processing system 100 in accordance with an embodiment of the present disclosure includes an operating system which can employ a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response. In other embodiments disclosed herein, the disclosed apps can run within data processing system 100 without a display or other human-machine interface. Such systems can read their configurations pushed to them over a data distribution system (for example RTI DDS, or similar), take inputs from the same data distribution system or from physical devices, and provide their outputs to the same data distribution system or to the physical world without any user interface. An application with user interface, including applications which are only created to provide human usable interface with the machine or system (HMI), might also connect to the data distribution system and read and publish data.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Storage 126 can store any of the data, programs, or other software elements useful in performing the processes as disclosed herein or for performing allocation of communication tags. In particular embodiments, storage 126 can include such elements as computer network connections 152, node data 154, application data 156, communication tag data 158, domain data 160, gateway data 162, distributions 164, configurations 166, cost analysis and other constraint data 168, communication tag mapping data 170, system performance data 172, and others.

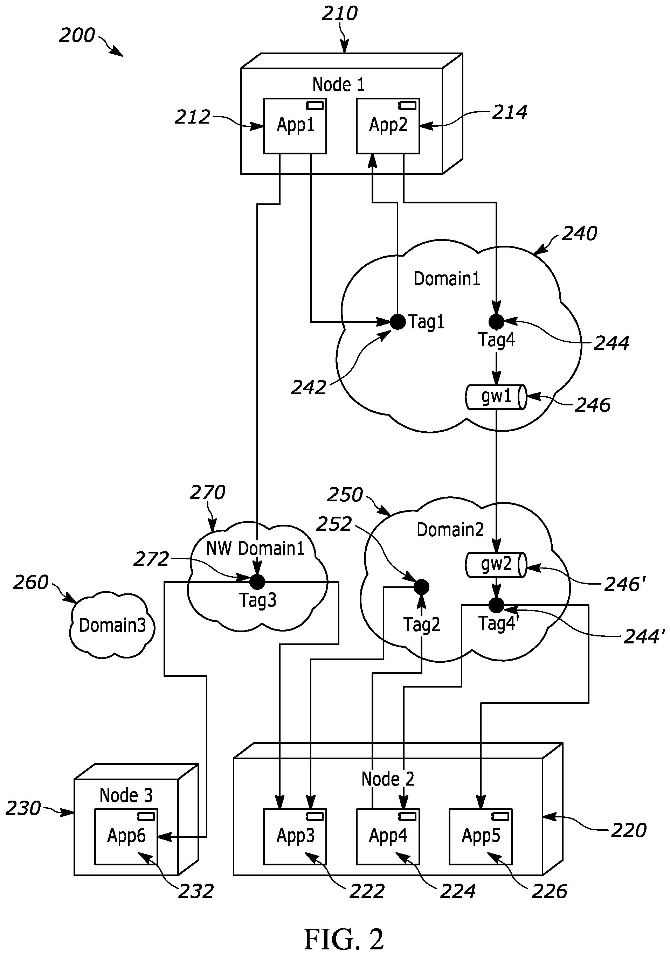

FIG. 2 illustrates a non-limiting example of a DDS-based computer network 200. Computer network 200 may be a network of DDS nodes together with a logical representation of communication tags as organized within various domains. In the example of FIG. 2, computer network 200 comprises nodes 210, 220, and 230. Each node 210, 220, and 230 may represent a physical device in computer network 200 that can either be a connection point, a redistribution point, or a communication point. As such, each node 210, 220, and 230 may send, receive, and/or forward information. Each of the nodes 210, 220, and 230 may comprise a media access control (MAC) address or an internet protocol (IP) address to facilitate the sending, receiving, and/or forwarding of information. In various embodiments, nodes 210, 220, and 230 may be computer hardware such as, without limitation, a hub, bridge, switch, modem, router, or any combinations thereof. Moreover, nodes 210, 220, and 230 may be computer hardware such as, without limitation, a data processing system 100, computer, laptop, desktop, tablet, printer, digital phone, smartphone, mobile device, mobile handset, smart watch, smart TV, smart appliances, or any combinations thereof. Note that, in other implementations, there may be any number of nodes in computer network 200. Further, nodes consisting of computer hardware with an IP address may be referred to herein as a "host" as well as a node.

As further illustrated in the example, each of nodes 210, 220, and 230 may comprise one or more applications utilizing DDS. Node 210 comprises applications 212 and 214, node 220 comprises applications 222, 224, and 226, and node 230 comprises application 232. Each application 212, 214, 222, 224, 226, and 232 may be any suitable application, program, or application software capable of performing a specific task or tasks via the operating system of its respective node. In various embodiments, applications 212, 214, 222, 224, 226, and 232 may be any general or business application such as, without limitation, web browsers, presentation software, spreadsheet software, graphic software, word processors, database software, multimedia software, education software, information software, content access software, or any combinations thereof. Furthermore, the applications may be those related to the field of Internet of Things where devices continuously and with high update rate provide data such as sensor measurements, control functions, signal processing or protocol translation. For instance, the applications may include industrial applications associated with machines that may provide input data (often coming from sensors) and control functions that process such input data to, in turn, provide actuator commands (e.g., making a motor running faster or slower). In certain embodiments that involve such applications, responses that are too slow or happen with a larger jitter may render the applications unusable. Note that, in other implementations, there may be any number of applications operating or running on each of nodes 210, 220, and 230.

As further illustrated in the example, each application 212, 214, 222, 224, 226, and 232 may publish and/or subscribe to one or more DDS communication tags. Application 212 publishes to communication tags 242 and 272, application 214 publishes to communication tag 244 and subscribes to communication tag 242, application 222 subscribes to communication tags 252 and 272, application 224 publishes to communication tag 252 and subscribes to communication tag 244', application 226 subscribes to communication tag 244', and application 232 subscribes to communication tag 272. Each communication tag 242, 244/244', 252, and 272 may be a tag or label added to data produced by an application in computer network 200. Such a tag or label provides a means for other applications in computer network 200 to access and obtain the data as desired using the tag or label. For example, as shown in FIG. 2, application 212 may perform a task that produces some type of data, and that data may be labeled via communication tag 242 (i.e., application 212 may publish data to communication tag 242). Moreover, application 214 may perform a task that requires use of the data produced by application 212. In order to access and obtain said data, application 214 may utilize communication tag 242 (i.e., application 214 may subscribe to communication tag 242 for data). Note that, in other implementations, there may be any number of communication tags to which applications 212, 214, 222, 224, 226, and 232 may publish and/or subscribe to.

As further illustrated in the example, each of communication tags 242, 244/244', 252, and 272 may be allocated into one or more DDS domains. Communication tags 242 and 244 are allocated to domain 240, communication tags 244' and 252 are allocated to domain 250, communication tag 272 is allocated to domain 270, and no communication tags are allocated to domain 260. In various embodiments, domains 240, 250, 260, and 270 are a means by which to group and/or subgroup communication tags 242, 244/244', 252, and 272. As described above, the number of communication tags within a single domain may be significant as it may affect memory utilization, system throughput, and overall speed of communication between applications in a computer network. This effect may be particularly significant when some of the applications are on the same node or in the same LAN, while other applications are on a remote node. In some embodiments, computer network 200 may further utilize one or more gateways between domains. As illustrated in the example, communication tag 244/244' may be bridged or synchronized between domains 240 and 250 via gateway 246/246'. As described above, gateways allow data associated with a particular communication tag to be synchronized and available across different domains. Moreover, gateways may introduce an increase of network-based communication, as opposed to communication over shared-memory, if there are numerous applications, but only two nodes using a communication tag. Note that because gateways are applications that must run on a node, they may also introduce CPU load. By keeping the same communication tag synchronized in two domains, local shared memory access to the communication tag may be allowed. Note that, in other implementations, there can be any number of domains to which communication tags 242, 244/244', 252, and 272 may be allocated, as well as any number of gateways across domains 240, 250, and 270. Various methods for determining the optimal number of domains, as well as the optimal allocation of communication tags into such domains, are disclosed herein.

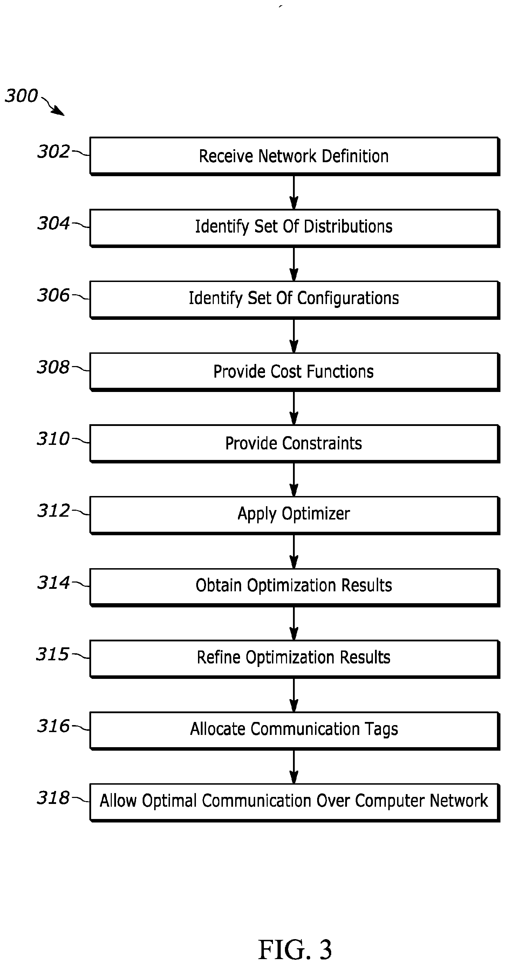

FIG. 3 illustrates an example of a process 300 for optimally allocating communication tags into one or more domains of a computer network that utilizes DDS, which may be implemented using one or more data processing systems 100 (referred to in the singular as the "system" below). Each process step described below as performed by a software component, operating one or more data processes, can be considered to be performed by one or more data processing systems. The system may model the communication needs of a computer network as a constraint-based optimization problem.

For process 300, the system can receive and analyze a network definition that describes a computer network (302). "Receiving," as used herein, can include loading from storage, receiving from another device or process, receiving via an interaction with a user, or otherwise. The computer network may be any communication network utilizing DDS with any number of nodes, applications, domains, and communication tags. Further, the computer network may be any LAN or long-distance routed configuration that operates over a wired and/or wireless connection. The network definition, as used herein, can be any file or description that describes any of these features and the network topology in general, whether received from a user, produced by a network analytics tool, or otherwise. As previously described, FIG. 2 illustrates a non-limiting example of a computer network (i.e., computer network 200) that may be described by a network definition received at step 302, however such a network is for illustrative purposes only. At step 302, the system can receive several variables such as, without limitation, total number of nodes, N, (e.g., host machines), total number of applications, $A$, total number of domains, $D$, and total number of communication tags or sets of tags needed by each application, T. Such variables may be provided by the user of the system, such as an expert with such knowledge of the computer network. Note that the nodes may be indexed by $n \in [0,1, ..., N - 1]$ and the applications may be indexed by $a \in [0,1, ..., A - 1]$.

In addition to the above variables, based on the network definition and other information received at step 302, the system can identify a set of distributions, $h_n$, which may be the distribution of application per node (304). Identification may be achieved because each node in the computer network may specify the applications it hosts. Variable $h_n$ may be represented as a vector, $(A \times 1)$, in which each row corresponds to an application. For example, referencing FIG. 2, $h_0$ for

node 210, if indexed at 0, may equal $\begin{bmatrix} 1 \\ 1 \\ 0 \\ 0 \\ 0 \\ 0 \end{bmatrix}$, if application

212 is index at 0 and application 214 is indexed at 1 because node 210 comprises applications 212 and 214. Further based on the analysis at step 302, the system can also identify a set of configurations, $\hat{t}_a$, which may be the configuration of communication tags per application (306). Identification may be achieved because each application in the computer network may provide a configuration file that describes the communication tags it publishes to as well as the communication tags it reads from. Variable $\hat{t}_a$ may be represented as a vector, $(T \times 1)$, in which each row corresponds to a communication tag.

In addition to variables $h_n$ and $\hat{t}_a$, the system can identify, obtain, or solve other variables based on the analysis at step 302. Such variables may include, without limitation, the configuration of communication tags per node, $t_n$, the configuration of domains per application, $\hat{d}_a$, the configuration of domains per node, $d_n$, and an overall mapping of tags per domain, $M$. Variable $t_n$ may be represented by a vector, $(T \times 1)$, in which each row corresponds to a communication tag. Variables $\hat{d}_a$ and $d_n$ may be represented by a vector, $(D \times 1)$, in which each row corresponds to a domain. Moreover, M may be represented by a matrix, ($D \times T$), in which each row corresponds to a domain and each column corresponds to a communication tag. Note that all vectors and matrices may be binary-valued, consisting of only 0's and 1's.

In various embodiments, various equations may be employed to identify, obtain, or solve for the above variables. Without limitation, such equations may be as follows:

$$d_n = M \cdot t_n \qquad (1)$$

$$\hat{d}_a = M \cdot \hat{t}_a \qquad (2)$$

$$t_n = [\hat{t}_0 \; \hat{t}_1 \; \cdots \; \hat{t}_{A-1}] \cdot h_n \qquad (3)$$

Equation 1 may provide the domains that node n will participate in and may be given by the union of all domains where tags required by that node are present. Equation 2 may provide the domains that application *a* will participate in and may be given by the union of all domains where tags required by that application are present. And finally, Equation 3 may provide the tags required by node n and may be given by the union of all tags required by the applications present on that node. An example of implementing the second equation is as follows: given a mapping $M = \begin{bmatrix} 0 & 0 & 1 & 1 & 0 \\ 1 & 0 & 0 & 0 & 1 \\ 0 & 1 & 0 & 0 & 0 \end{bmatrix}$, where there are accordingly 5 communication tags ($T = 5$) within three domains ($D = 3$), and further given an allocation of communication tags for application a where $\hat{t}_a = \begin{bmatrix} 0 \\ 1 \\ 0 \\ 0 \\ 1 \end{bmatrix}$, it may be computed that application a must participate in the domains given by $\hat{d}_a = \begin{bmatrix} 0 \\ 1 \\ 1 \end{bmatrix}$. This example is 1 non-limiting and meant to be for illustrative purposes only. In typical usage, these equations may be solved algorithmically or through optimization techniques to determine an optimal allocation of tags per domain ($M$) given a set of known allocations of tags per application ($\hat{t}_a$) and a set of known allocations of apps per node ($h_n$).

Once the necessary variables have been identified in process 300, the system can provide, as selected by the user, one or more cost functions (308). A cost function may be a mathematical function that measures the difference between a predicted output and an actual output of an optimization model. This difference may represent the error or deviation in the model and thus should be minimized as much as possible. In various embodiments, various cost functions may be provided such as, without limitation, a throughput cost function, a startup time cost function, a memory utilization cost function, a synchronization cost function, any other suitable cost function, or any combinations thereof. The throughput cost function optimizes the throughput of the system by calculating the distance between the required throughput and the achieved throughput for a given DDS configuration for every communication tag. The cost may be represented by the smallest distance. For example, a throughput cost function may involve minimizing the number of nodes participating in each domain, since if a domain is only used by a single node, then the communication tags in that domain may communicate via shared memory rather than over the network. Furthermore, if a domain is not used by any node, then the domain may be removed altogether. Such a cost function may be given by:

$$J_1 = \left| [d_0 \quad d_1 \quad \cdots \quad d_{N-1}] \cdot \begin{bmatrix} 1 \\ 1 \\ \vdots \\ 1 \end{bmatrix} \right|_1 \qquad (4)$$

Note that in Equation 4, the notation $|\cdot|_1$ represents the $L^1$ norm or sum of the absolute values of the argument. Similarly to the throughput cost function, the startup time cost function and the memory utilization cost function optimize the startup time and the memory utilization of the system, respectively, by calculating the distance between the required startup time/memory utilization and the achieved startup time/memory utilization for a given DDS configuration for every communication tag. In various embodiments, the synchronization cost function may involve minimizing the use of gateways unless a clear benefit is achieved. Such a cost function may be given by:

$$J_2 = \left| M \cdot \begin{bmatrix} 1 \\ 1 \\ \vdots \\ 1 \end{bmatrix}_{(T \times 1)} - \begin{bmatrix} 1 \\ 1 \\ \vdots \\ 1 \end{bmatrix}_{(D \times 1)} \right|_1 \qquad (5)$$

Once again, the notation $|\cdot|_1$ in Equation 5 represents the $L^1$ norm or sum of the absolute values of the argument.

In process 300, the system can further provide one or more constraints (310). A constraint may be a condition that an optimization model must satisfy. In various embodiments, various constraints may be provided such as, without limitation, an equality constraint, an inequality constraint, an integer constraint, any other suitable constraint, or any combinations thereof. For a computer network utilizing DDS, any communication requirements, memory constraints, and startup thresholds may be represented as constraints for the optimization model. For instance, regarding the communication requirements, each application in the computer network may provide a configuration file that describes all communication tags the application publishes and subscribes to. Further, each application may specify for each communication tag with which update rate the application writes to and reads from as well as the volume of the data the application is publishing and subscribing. Further still, each application may specify the amount of RAM the application requires for execution. Regarding the memory constraints, each host in the computer network may specify the amount of RAM the application has available for applications and communication. Further, each host also specifies the applications it hosts. Regarding the startup threshold, each host specifies the maximum time it may be allowed to spend booting. Each of the specifications described above may be provided as constraints that must be satisfied for the optimization model. In addition, constraints involving the maximum number of domains that all applications operating on a single host may be a member of, as well as the maximum number of domains that a single application may be a member of, may be applied. As an example, the total number of domains per node may be limited or constrained to no more than 130 domains, given by the following constraint:

$$C_1 : \text{Total domains of node n} : |d_n|_1 \leq 130, \forall n \in [0, N-1] \qquad (6)$$

As another example, the total number of domains per application may be limited or constrained to no more than 40 domains, given by the following constraint:

$$C_2 : \text{Total domains of app a} : |d_a|_1 \leq 40, \forall a \in [0, A-1] \qquad (7)$$

Once the necessary variables have been identified and the necessary cost functions and constraints have been provided in process 300, the system can apply an optimizer (312). The optimizer may be a computer program or tool capable of taking, as inputs, the identified variables, the provided cost functions, and the provided constraints, and providing an output or for the constraint-based optimization problem (i.e., the optimal solution for allocation of one or more communication tags among one or more domains). In various embodiments, the applied optimizer may be any suitable optimizer including, without limitation, a linear optimizer, a commercial optimizer, an open-source optimizer, one or more SAT solvers, or any combinations thereof. As an example, the optimizer can solve an optimization problem which may be posed as follows: given a set of distributions of applications per node, $h_n$, and a set of configurations of communication tags per application, $\hat{t}_a$, solve for the optimal number of domains, $D$, and mapping, M, such that $J$ is minimized and subject to the constraints C.

After applying the optimizer at step 312, the system can obtain the optimization results provided by the optimizer (314). As disclosed above, the optimization results may include the optimal number of domains, D, needed to optimally allocate the communication tags of the computer network. Further, the optimization results may include a communication tag allocation map, *M*, which may be a matrix that designates the domain that each communication tags should be assigned to. For example, given certain inputs, an optimizer may output that the optimal number of domains, *D*, for a computer network comprising five communication tags is three (*D* = 3). Further, the optimizer may output that the communication tag allocation map is $M = \begin{bmatrix} 0 & 0 & 1 & 1 & 0 \\ 1 & 0 & 0 & 0 & 1 \\ 0 & 1 & 0 & 0 & 0 \end{bmatrix}$. Where the five communication tags are indexed from 0 to 4 and the three domains are indexed from 0 to 2, *M* provides that the tags indexed at 2 and 3 should be assigned to the domain indexed at 0, that the tags indexed at 0 and 4 should be assigned to the domain indexed at 1, and that the tag indexed at 1 should be assigned to the domain indexed at 3. In some embodiments, the communication tag allocation map, $M$, may be computed with more that one 1-valued entry in a column (i.e., a single communication tag may be assigned to more than one domain). This may indicate that a gateway exists, which synchronizes that particular communication tag (column) across the multiple domains (rows). For example, the optimizer may output that the communication tag allocation

$$M = \begin{bmatrix} 0 & 0 & 1 & 1 & 0 \\ 1 & 1 & 0 & 0 & 1 \\ 0 & 1 & 0 & 0 & 0 \end{bmatrix}$$

map is , which indicates that the tag indexed at 1 should be assigned to both the domain indexed at 1 and the domain indexed at 2, and further indicates that such synchronization should be achieved via a gateway. Note that those skilled in the art may recognize that the cost function defined in Equation 5 above, or other similar cost functions, penalize the addition of gateways, and should therefore be balanced by a throughput cost function such as provided by Equation 4. This balancing via a throughput cost function may incentivize the creation of gateways, should it improve the overall throughput achieved by the system.

After the optimizer has been applied and the optimization results obtained (e.g., $D$ and $M$), the system can refine the optimization results (315). In various embodiments, refinement of the optimization results may include, without limitation, identifying communication tags within domains that could be replaced with a gateway to provide for more efficient network communication. At refinement step 315, the system may analyze the domains, and should it find less than n communication tags (n being a user-defined value) in a domain being used by only two nodes, while all other domains are being utilized by more than two nodes, then said communication tag or tags may be shared via a gateway. As an example, the optimization results may provide a domain that is being shared by two nodes and comprises ten communication tags. Of these ten communication tags, nine are being utilized by applications on one of the two nodes, and one is being shared by the two nodes. As such, the shared tag could be replaced with a gateway so that the first node can implement that domain with shared memory locally, and the second node can use a different domain (e.g., a local domain) for the shared tag.

After refining the obtained optimization results (e.g., $D$ and $M$), the system carrying out process 300 can actually allocate the one or more communication tags into the one or more domains based on the determined optimization results (316). As described above, actual allocation may be accomplished via the configuration mechanisms provided by DDS technology. Such allocation is automatically performed by the data processing system, and thus, may eliminate the need for any manual allocation, which may be time consuming and error prone.

Finally, once the communication tags have been optimally allocated to their determined domains, the system can communicate, or enable optimal communication, throughout the computer network based on the communication tags (318). Such optimal communication may include a fast and efficient transfer of data between applications on the same and different nodes in the computer network. For instance, a node with applications subscribing to certain communication tags may retrieve the data published to those tags by other applications more quickly under the optimal arrangement. Further, by this optimal arrangement, the computer network may achieve a technical improvement in overall network communication and system performance.

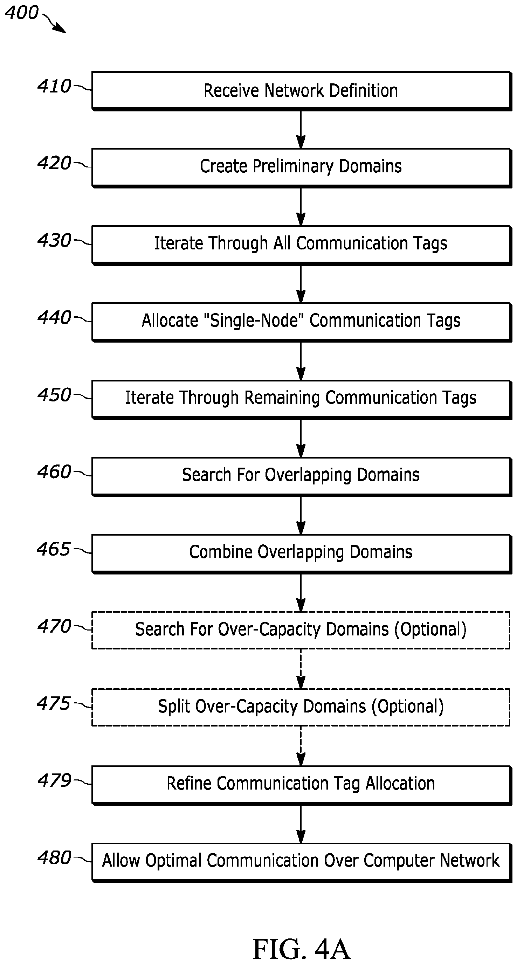

FIG. 4A illustrates an algorithmic partitioning example of a process 400 for optimally allocating communication tags into one or more domains of a computer network that utilizes DDS, which may be implemented using one or more data processing systems 100 (referred to in the singular as the "system" below). Each process step described below as performed by a software component, operating one or more data processes, can be considered to be performed by the data processing system.

For process 400, the system can receive and analyze a network definition of a computer network (410). The computer network may, once again, be any communication network utilizing DDS with any number of nodes, applications, domains, and communication tags. Further, the computer network may be any LAN or long-distance routed configuration that operates over a wired and/or wireless connection. As previously described, FIG. 2 illustrates a non-limiting example of a computer network (i.e., computer network 200) that may be described by a network definition at step 410, however such a network is for illustrative purposes only. At step 410, the system can receive the number of nodes, the applications on each of those nodes, and the communication tags that each of those applications publish and subscribe to. As previously disclosed, each node in the computer network may specify the applications it hosts, and further, each application in the computer network may provide a configuration file that describes the communication tags it publishes to as well as the communication tags it reads from. In some cases, these variables may be provided by the user of the system, such as an expert with such knowledge of the computer network.

After analyzing the computer network at step 410, in process 400, the system can create a preliminary domain for each of the one or more nodes on the computer network, such that each of the preliminary nodes corresponds to one of the one or more nodes (420). For example, executing step 420 for computer network 200, in which there are three nodes 210, 220, and 230, would result in the creation of three preliminary domains, each corresponding to one of the three nodes, respectively.

Following the creation of the preliminary nodes at step 420, in process 400, the system can iterate through each of the one or more communication tags of the computer network (430). At each iteration, the system can determine the one or more nodes utilizing the communication tag being evaluated. For example, executing step 430 for computer network 200 may determine that communication tag 242 is being utilized by node 210, that communication tag 244/244' is being utilized by nodes 210 and 220, that communication tag 252 is being utilized by node 220, and that communication tag 272 is being utilized by nodes 220 and 230.

Upon making the determinations at step 430, in process 400, the system can allocate any of the one or more communication tags that are utilized by only a single node into that node's corresponding preliminary domain (440). For example, executing step 440 for computer network 200 may allocate communication tag 242 into the preliminary domain of node 210, and further, may allocate communication tag 252 into the preliminary domain of node 220. Both communication tags 242 and 252 are only utilized by a single node. Note that, as described above, allocation may be accomplished via the configuration mechanisms provided by DDS technology.

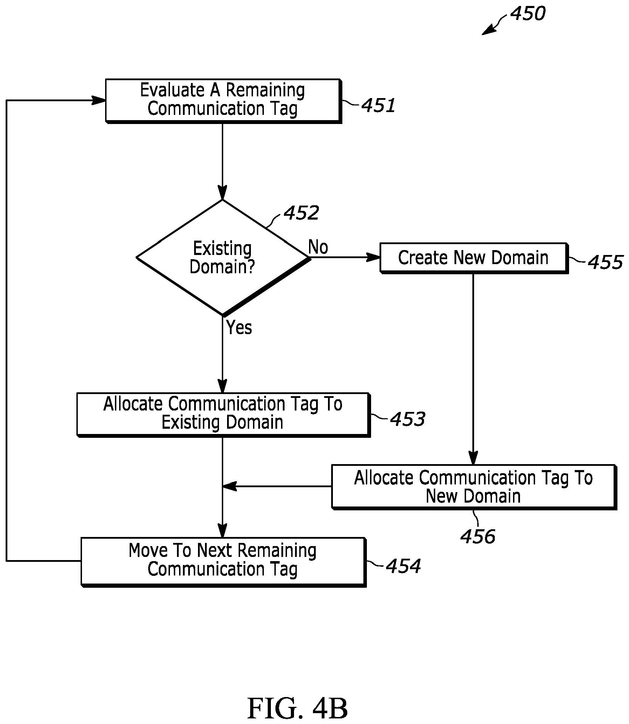

After iterating through all of the one or more communication tags at step 440 and allocating any of the "single-node" communication tags into their corresponding preliminary domain, in process 400, the system can iterate through any remaining communication tags (450). At each iteration, the system can determine a domain in which each remaining communication tag being evaluated should be allocated. The determined domain may be a newly created domain or any existing domain such as the preliminary domains or any subsequently created new domain. The iteration process 450 for the remaining communication tags is further described in FIG. 4B below.

FIG. 4B illustrates an example of process 450 for iterating through the remaining communication tags, allocating those communication tags to existing domains, if possible, and creating new domains for those communication tags if allocation to existing domains is not possible. For process 450, the system can evaluate a first remaining communication tag in accordance with the first iteration of all the remaining communication tags (451). Upon evaluating the first remaining communication tag, the system can determine whether there is an existing domain to which the first remaining communication tag may be allocated (452). In general, each of the remaining communication tags may be allocated to an existing domain if there exists a domain with one or more communication tags that service the exact same nodes as the remaining communication tag being evaluated (453). Once allocated to an existing domain, the system can move to the next remaining communication tag in accordance with the next iteration (454) and start from the beginning at evaluation step 451.

With regard to the first remaining communication tag at decision block 452, there would be no existing domains in which to allocate the first remaining tag. The only existing domains at this point in process 400 may be the preliminary domains which designedly only comprise communication tags that service a single node. As such, for the first remaining communication tag as well as any other subsequent remaining communication tags that cannot be allocated to an existing domain, the system can create a new domain (455) and allocate such a remaining communication tag to that new domain (456). At this point in process 450, the newly created domain may be considered an existing domain comprising the first remaining communication tag or other remaining communication tags that could not be allocated for purposes of evaluating any subsequent remaining communication tags. After allocating such remaining communication tags, the system can move, once again, to the next remaining communication tag in accordance with the next iteration (454) and start from the beginning at evaluation step 451. The system can iterate through each of the remaining communication tags until each remaining tag is allocated to a domain.

Referring once again to FIG. 4A, once all of the one or more communication tags of the computer network are allocated into domains according to the determinations made by the system in process 400, thus far, there could potentially be a breach of constraints due to a high number of domains. As such, the system can search for any overlapping domains (460). Overlapping domains may be any two or more existing domains which comprise communication tags servicing substantially similar nodes of the one or more nodes. In various embodiments, a user-configurable threshold may be set for determining such overlapping domains. For example, the user may set the threshold at 50%, meaning that when two or more existing domains have 50% or more communication tags in common, they are classified as overlapping domains. Furthermore, should the system determine at step 460 that two or more nodes are overlapping, the system can combine each of the overlapping domains, if any (465). For example, if a first domain comprises a communication tag servicing only theoretical nodes 1, 2, and 3, and a second domain comprises a communication tag servicing only theoretical nodes 1 and 2, this pair of domains may be combined at step 465 because the nodes that each domain services significantly overlaps.

Just as there may be a potential breach when the system allocates all of the one or more communication tags into their respective domains at step 450, there may also be a potential breach of constraints when the system combines overlapping domains, due to a high number of communication tags in a single domain. Accordingly, the system can optionally search for over-capacity domains (470). An over-capacity domain may be any existing domain which comprises a number of too many communication tags, wherein the number may be defined by the user. While there may be no official limit of the number of communication tags per domain, each additional tag may increase startup time and memory utilization. Note that when an application joins a domain, the system will be informed about the existence of all the communication tags in that domain even if it is not using them. Furthermore, should the system determine at step 470 that any of the domains is an over-capacity domain, the system can optionally split each over-capacity domain, if any, with regard to its number of communication tags (475).

Once any of the potential breaches of constraints have been remedied the system can refine the communication tag allocation (479). In various embodiments, refinement of the communication tag allocation may include, without limitation, identifying communication tags within domains that could be replaced with a gateway to provide for more efficient network communication. At refinement step 479, the system may analyze the domains, and should it find less than n communication tags (n being a user-defined value) in a domain being used by only two nodes, while all other domains are being utilized by more than two nodes, then said communication tag or tags may be shared via a gateway. As an example, the communication tag allocation may provide a domain that is being shared by two nodes and comprises ten communication tags. Of these ten communication tags, nine are being utilized by applications on one of the two nodes, and one is being shared by the two nodes. As such, the shared tag could be replaced with a gateway so that the first node can implement that domain with shared memory locally, and the second node can use a different domain (e.g., a local domain) for the shared tag.

After refinement of the allocation of communication tags, the system has optimally allocated the one or more communication tags of the computer network. Such allocation is automatically performed by the data processing system, and thus, may eliminate the need for any manual allocation. At this point, the system can communicate, or enable optimal communication, throughout the computer network (480). Such optimal communication may include a fast and efficient transfer of data between applications on the same and different nodes in the computer network. For instance, a node with applications subscribing to certain communication tags may retrieve the data published to those tags by other applications more quickly under the optimal arrangement. Further, by this optimal arrangement, the computer network may achieve a technical improvement in overall network communication and system performance.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/-readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to be treated as "means plus function" type limitations unless the exact words "means for" are followed by a participle. The use of terms such as (but not limited to) "mechanism," "module," "device," "unit," "component," "element," "member," "apparatus," "machine," "system," "processor," or "controller," within a claim is understood and intended to refer to structures known to those skilled in the relevant art, as further modified or enhanced by the features of the claims themselves.

**Claims**

1. A method for allocating communication tags (242, 244/244', 252, 272) into one or more data distribution (DDS) domains the method comprising:

   analyzing (302, 410) a network definition of a computer network (200) comprising a plurality of nodes (210, 220, 230), wherein each of the plurality of nodes (210, 220, 230) comprise one or more applications (212, 214, 222, 224, 226, 232) utilizing DDS, wherein each of the one or more applications (212, 214, 222, 224, 226, 232) perform at least one of publishing to at least one of a plurality of communication tags (242, 244/244', 252, 272) and reading from at least one of the plurality of communication tags (242, 244/244', 252, 272);

grouping, based on the analysis (302, 410), the plurality of communication tags (242, 244/244', 252, 272) into one or more domains; and

providing an optimal arrangement of the plurality of communication tags (242, 244/244', 252, 272) into the one or more domains, wherein the optimal arrangement improves network communication and system performance of the computer network (200).

2.  The method of claim 1, wherein the grouping step comprises:

identifying (304) a set of distributions for the computer network (200), wherein the set of distributions specify which of the one or more applications (212, 214, 222, 224, 226, 232) are running on each of the one or more nodes (210, 220, 230), respectively;

identifying (306) a set of configurations for the computer network (200), wherein the set of configurations specify which of the plurality of communication tags (242, 244/244', 252, 272) are being utilized by each of the one or more applications (212, 214, 222, 224, 226, 232), respectively;

providing (308) one or more cost functions;

providing (310) one or more constraints;

applying (312) an optimizer to the set of distributions and the set of configurations to determine optimization results (314) that comprise at least an optimal number of domains and an optimal mapping of the plurality of communication tags to the optimal number of domains, wherein the optimizer minimizes the one or more provided cost functions and accounts for the one or more provided constraints; and

allocating (316) the plurality of communication tags (242, 244/244', 252, 272) into one or more domains, according to the optimal mapping of the plurality of communication tags to the optimal number of domains determined by the optimizer.

3.  The method of claim 2, wherein the one or more constraints comprise limiting a total number of domains per node to no more than 130 domains.

4.  The method of claim 2, wherein the one or more constraints comprise limiting a total number of domains per application to no more than 40 domains.

5.  The method of claim 2, wherein the optimizer is a linear optimizer, commercial optimizer, open-source optimizer, one or more SAT solvers, or any combinations thereof.

6.  The method of claim 2, further comprising refining (315) the optimization results by incorporating one or more gateways.

7.  The method of claim 1, wherein the grouping step comprises:

creating (420) a preliminary domain for each of the one or more nodes (210, 220, 230), wherein each preliminary domain corresponds to one of the one or more nodes (210, 220, 230), respectively;

iterating (430) through the plurality of communication tags (242, 244/244', 252, 272) to determine which of the plurality of communication tags (242, 244/244', 252, 272), if any, are being utilized by a single node of the one or more nodes (210, 220, 230);

allocating (440) each of the plurality of communication tags (242, 244/244', 252, 272) that are accessed by a single node into the preliminary domain corresponding to that node; and

iterating (450) through one or more remaining communication tags not yet allocated, if any, until each of the one or more remaining communication tags are allocated into an existing domain, wherein each iteration (450) comprises:

allocating (453), if possible, the remaining communication tag that is being accessed by multiple nodes into any existing domain comprising at least one communication tag that is being accessed by the same exact multiple nodes;

creating (455) a new domain, if allocation is not possible, wherein the remaining communication tag is allocated to the new domain and wherein the new domain becomes one of the existing domains;

searching (460) through the existing domains to find any overlapping domains, wherein the overlapping domains comprise two or more existing domains that service a number of the same one or more nodes (210, 220, 230); and combining (465) any of the overlapping domains into a single domain.

8. The method of claim 7, further comprising splitting (475) any existing domains that comprise a number of communication tags that breach a maximum communication tag capacity per domain.

9. The method of claim 7, wherein a total number of domains per node is limited to no more than 130 domains.

10. The method of claim 7, wherein a total number of domains per application is limited to no more than 40 domains.

11. The method of claim 7, further comprising refining (479) allocation of the plurality of communication tags (242, 244/244', 252, 272) by incorporating one or more gateways.

12. The method of any of claims 1-11, wherein each of the one or more nodes (210, 220, 230) provide which of the one or more applications (212, 214, 222, 224, 226, 232) it hosts.

13. The method of any of claims 1-12, wherein each of the one or more applications (212, 214, 222, 224, 226, 232) provides which of the plurality of communication tags (242, 244/244', 252, 272) it publishes and subscribes to.

14. The method of any of claims 1-13, wherein the allocating steps (316, 440, 453) are performed via DDS configuration mechanisms.

15. The method of any of claims 1-14, wherein the allocating steps (316, 440, 453) are performed automatically.

16. The method of any of claims 1-15, the computer network (200) is any local area network (LAN) or long-distance routed configuration that operates over a wired and/or wireless connection.

17. The method of any of claims 1-16, further comprising communicating (318, 480) over the computer network (200) between the one or more applications (212, 214, 222, 224, 226, 232) on the plurality of nodes (210, 220, 230) using the optimal arrangement.

18. A system comprising at least one data processing system (100) in a computer network (200) configured to perform the method of any of claims 1-17.

100

| Processor 102 | Cache/ Bridge 104 | Memory 108 | Graphics Adapter 110 | Display 111 |

106

Expansions Bus Interface 114

LAN / WAN / WiFi Adapter 112

116

| Audio Adapter 124 | Keyboard/ Mouse Adapter 118 | Disk Controller 120 | Input/Output Adapter 122 |

Network 130

Server 140

126

Storage

| 152 | 158 | 164 | 170 |
| 154 | 160 | 166 | 172 |
| 156 | 162 | 168 | |

FIG. 1

FIG. 2

*300*

| | |
|---|---|
| *302* | Receive Network Definition |
| *304* | Identify Set Of Distributions |
| *306* | Identify Set Of Configurations |
| *308* | Provide Cost Functions |
| *310* | Provide Constraints |
| *312* | Apply Optimizer |
| *314* | Obtain Optimization Results |
| *315* | Refine Optimization Results |
| *316* | Allocate Communication Tags |
| *318* | Allow Optimal Communication Over Computer Network |

FIG. 3

400

| 410 | Receive Network Definition |

| 420 | Create Preliminary Domains |

| 430 | Iterate Through All Communication Tags |

| 440 | Allocate "Single-Node" Communication Tags |

| 450 | Iterate Through Remaining Communication Tags |

| 460 | Search For Overlapping Domains |

| 465 | Combine Overlapping Domains |

| 470 | Search For Over-Capacity Domains (Optional) |

| 475 | Split Over-Capacity Domains (Optional) |

| 479 | Refine Communication Tag Allocation |

| 480 | Allow Optimal Communication Over Computer Network |

FIG. 4A

450

Evaluate A Remaining
Communication Tag — 451

Existing
Domain? — 452
No → Create New Domain — 455

Yes

Allocate Communication Tag To
Existing Domain — 453

Allocate Communication Tag To
New Domain

456

Move To Next Remaining
Communication Tag — 454

FIG. 4B

Europäisches
Patentamt

European
Patent Office

Office européen
des brevets

# EUROPEAN SEARCH REPORT

**Application Number**

EP 23 19 1283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANTONIO CORRADI ET AL: "A DDS-compliant infrastructure for fault-tolerant and scalable data dissemination", COMPUTERS AND COMMUNICATIONS (ISCC), 2010 IEEE SYMPOSIUM ON, IEEE, PISCATAWAY, NJ, USA, 22 June 2010 (2010-06-22), pages 489-495, XP031731273, ISBN: 978-1-4244-7754-8 * the whole document * | 1-18 | INV.<br>H04L65/80<br>H04L67/12<br>H04L67/55<br>H04L65/4053<br>H04W4/70 |
| A | US 2022/360653 A1 (WOUHAYBI RITA H [US] ET AL) 10 November 2022 (2022-11-10) * the whole document * | 1-18 | |
| A | WO 2014/060361 A1 (THOMSON LICENSING [FR]) 24 April 2014 (2014-04-24) * the whole document * | 1-18 | |
| A | US 2020/314164 A1 (CRESPO SANCHEZ FERNANDO [US] ET AL) 1 October 2020 (2020-10-01) * the whole document * | 1-18 | TECHNICAL FIELDS SEARCHED (IPC)<br><br>H04L<br>H04W |

The present search report has been drawn up for all claims

| Place of search | Date of completion of the search | Examiner |
|---|---|---|
| The Hague | 16 January 2024 | Mannekens, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 1283**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-01-2024**

| Patent document cited in search report | | Publication date | Patent family member(s) | | Publication date |
|---|---|---|---|---|---|
| US 2022360653 | A1 | 10-11-2022 | CN | 111164952 A | 15-05-2020 |
| | | | DE | 112018005879 T5 | 20-08-2020 |
| | | | JP | 7171713 B2 | 15-11-2022 |
| | | | JP | 7392245 B2 | 06-12-2023 |
| | | | JP | 2021503639 A | 12-02-2021 |
| | | | JP | 2023024983 A | 21-02-2023 |
| | | | KR | 20200088803 A | 23-07-2020 |
| | | | US | 2019041824 A1 | 07-02-2019 |
| | | | US | 2019041830 A1 | 07-02-2019 |
| | | | US | 2019042378 A1 | 07-02-2019 |
| | | | US | 2020310394 A1 | 01-10-2020 |
| | | | US | 2021243284 A1 | 05-08-2021 |
| | | | US | 2022329676 A1 | 13-10-2022 |
| | | | US | 2022360653 A1 | 10-11-2022 |
| | | | WO | 2019099111 A1 | 23-05-2019 |
| WO 2014060361 | A1 | 24-04-2014 | EP | 2909997 A1 | 26-08-2015 |
| | | | US | 2015304429 A1 | 22-10-2015 |
| | | | WO | 2014060361 A1 | 24-04-2014 |
| US 2020314164 | A1 | 01-10-2020 | NONE | | |

EPO FORM P0459

For more details about this annex : see Official Journal of the European Patent Office, No. 12/82